# EUROPÄISCHE PATENTANMELDUNG

(11) **EP 1 001 640 A1**
(43) Veröffentlichungstag der Anmeldung: **17.05.2000**
(21) Anmeldenummer: 99121688.8
(22) Anmeldetag: 02.11.1999
(51) Int. Cl.: H04Q 7/32

(54) **Sicherung von Mobilstationen eines Funk-Kommunikationssystems**

(30) Priorität: 16.11.1998 DE 19852732
(71) Anmelder: SIEMENS AKTIENGESELLSCHAFT, 80333 München (DE)
(72) Erfinder: Vinck, Bart, 2050 Antwerpen (BE)

(57) **Zusammenfassung**

Ausgehend davon, dass jede Mobilstation (MT) ein Identitätsmodul (USIM) und eine Benutzergerät (UE) aufweist, wird gemäß dem Gegenstand der Erfindung das Benutzergerät (UE) durch ein teilnehmergesteuertes Sperren und Entsperren gegen einen Missbrauch gesichert. Das erfindungsgemäße Merkmal, teilnehmergesteuert ein Sperren/Entsperren des Benutzergeräts (UE) durchzuführen, macht vorteilhafterweise ein netzseitiges zentrales Register mit Gerätekennungen zur Identifikation gestohlener Benutzergeräte redundant und erhöht für den Teilnehmer somit den Grad der Sicherheit der von ihm verwalteten Benutzergeräte.

## Beschreibung

Die Erfindung betrifft ein Verfahren zur Sicherung von Benutzergeräten mobiler Teilnehmer in Mobilstationen eines Funk-Kommunikationssystems gemäß dem Oberbegriff des Patentanspruchs 1 sowie eine entsprechend ausgebildete Mobilstation gemäß dem Oberbegriff des Patentanspruchs 9.

Es ist allgemein bekannt, dass Mobilstationen mobiler Teilnehmer eines Funk-Kommunikationssystems jeweils ein Benutzergerät und ein Identitätsmodul (User Services Identity Module bei UMTS-Netzen oder Subscriber Identity Module bei GSM-Netzen) umfassen. Auch ist bekannt, in Funk-Kommunikationssystemen mehrere Arten von Sicherungsfunktionen anzuwenden. So ist in der EP-0 822 727 A2 ein Verfahren und ein System zur Teilnehmerauthentifikation und/oder Verschlüsselung von Informationen beschrieben, bei dem mobile Benutzer eines zellularen digitalen Mobilfunknetzes nach dem GSM-Standard sich mit dem Identitätsmodul - SIM-Karte - gegenüber dem jeweiligen Netz identifizieren. Sicherheitsparameter und Sicherheitsalgorithmen dienen dabei zur Teilnehmerauthentifikation zwischen Mobilstation und Mobilfunknetz.

Darüber hinaus ist eine Sicherungsfunktion auch für die mobilen Benutzergeräte möglich, indem bekanntlich eine Gerätekennung (IMEI, International Mobile Equipment Identity) netzseitig überprüft wird, um festzustellen, ob das Benutzergerät im Mobilfunknetz bekannt ist und, falls dies zutrifft, ob es zugelassen ist oder nicht. Zu diesem Zweck ist ein gesondertes Register - das Gerätekennzeichenregister (EIR, Equipment Identity Register) - mit mehreren Gerätekennungen als Registereinträge angeordnet. Die Initiative zur Überprüfung der Gerätekennung geht von der abhängig vom Aufenthaltsort der Mobilstation zuständigen Vermittlungseinrichtung aus. Die Nachteile der Sicherung von Benutzergeräten - insbesondere gestohlener Geräte - gegen Missbrauch auf der Basis eines Registers liegen beispielsweise darin, dass diese Art der Sicherungsfunktion für die Netzbetreiber nicht verpflichtend, sondern nur optional ist und dass dieses Register, sofern eingerichtet und verwaltet, nur innerhalb des jeweiligen Netzes und nicht bei Bewegung des Teilnehmers über die Netzgrenzen seines Heimat-Mobilfunknetzes hinaus einen wirksamen Schutz bietet. Insgesamt ist nur eine eingeschränkte Zuverlässigkeit der Sicherung von Benutzergeräten festzustellen.

Aufgabe der vorliegenden Erfindung ist es, ein Verfahren zu schaffen, durch das eine bessere Sicherung von Benutzergeräten erzielbar ist. Des weiteren ist eine Mobilstation mit einem entsprechenden Benutzergerät anzugeben.

Diese Aufgabe wird gemäß den Merkmalen des Patentanspruchs 1 hinsichtlich des Verfahrens und durch die Merkmale des Patentanspruchs 9 hinsichtlich der Mobilstation gelöst.

Ausgehend davon, dass jede Mobilstation ein Identitätsmodul und ein Benutzergerät aufweist, wird gemäß dem Gegenstand der Erfindung das Benutzergerät durch ein teilnehmergesteuertes Sperren und Entsperren gegen einen Missbrauch gesichert. Das erfindungsgemäße Merkmal, teilnehmergesteuert ein Sperren/Entsperren des Benutzergeräts durchzuführen, macht vorteilhafterweise ein netzseitiges zentrales Register mit Gerätekennungen zur Identifikation gestohlener Benutzergeräte redundant und erhöht für den mobilen Teilnehmer somit den Grad der Sicherheit der von ihm verwalteten Benutzergeräte. Das netzseitige Kennzeichnen gesperrter - weil beispielsweise gestohlener - Benutzergeräte entfällt somit.

Gemäß einer besonders vorteilhaften vorteilhaften Weiterbildung der Erfindung wird durch das Sperren und Entsperren des Benutzergeräts eine Bindung an das Identitätsmodul erzeugt und aufgehoben. Dadurch hat der mobile Teilnehmer die Möglichkeit, selbst in den Zugriff zu seiner Mobilstation steuernd einzugreifen, d.h. beispielsweise auch andere Benutzer sich an seinem Endgerät authentifizieren zu lassen. Auch eine Nutzung mehrerer Identitätsmodule nacheinander in ein- und demselben Endgerät - z.B. wegen Übertritt des Teilnehmers von einem Netz zum anderen Netz - ist durch das Setzen und Aufheben der Bindung des Benutzergeräts an das jeweiligen Identitätsmodul erst möglich. Die einstellbare und wieder aufhebbare Bindung des Benutzergeräts an das jeweils in die Mobilstation eingesetzte Identitätsmodul bietet - an Stelle einer Identifizierung gegenüber dem jeweiligen Mobilfunknetz und einer möglichen Sperre durch das Mobilfunknetz - den weiteren Vorteil, dass die Signalisierung auf der Funk-Schnittstelle zwischen Mobilstation und Netz sowie die Signalisierung auf Netzverbindungen zwischen verschiedenen Netzbetreibern eingespart werden kann. Die Möglichkeit der Änderung des Sperrzustands des Benutzergeräts, die nur in der Mobilstation und nur teilnehmergesteuert erfolgen kann, bietet folglich mehr Sicherheit gegen Missbrauch insbesondere von gestohlenen Benutzergeräten bzw. Mobilstationen.

Als günstig hat sich gemäß einer Weiterbildung der Erfindung erwiesen, dass zum Sperren und Entsperren des Benutzergeräts eine Teilnehmerauthentifikation gegenüber dem Identitätsmodul durchgeführt wird. Damit wird einerseits die Sicherheit auf Benutzerbasis erhöht, andererseits kann sich auch ein weiterer Benutzer in dem entsperrten Zustand des Benutzergeräts mit Zustimmung des mobilen Teilnehmers gegenüber der Mobilstation authentifizieren und die Mobilstation für seine Zwecke nutzen. Vorzugsweise wird zur Teilnehmerauthentifikation eine persönliche Identifikationsnummer verwendet.

Gemäß einer weiteren Ausgestaltung der Erfindung werden für die Teilnehmerauthentifikation andere Sicherheitsparameter als die bei einer Benutzerauthentifikation zur Überprüfung der Zugangsberechtigung eines mobilen Benutzer zum Funk-Kommunikationssystem benutzten Sicherheitsparameter angewendet. Dies hat den Vorteil, dass eine gegenseitige Beeinflussung der Benutzerauthentifikation und der Teilnehmerauthentifikation sicher ausgeschlossen werden kann.

Die Erfindung wird anhand eines Figuren dargestellten Ausführungsbeispiels näher erläutert. Im einzelnen zeigen
- FIG 1: das Blockschaltbild einer Mobilstation mit Benutzergerät und Identitätsmodul,
- FIG 2: den Nachrichtenfluß zwischen Teilnehmer, Benutzergerät und Identitätsmodul für das Setzen einer Sperre im Benutzergerät,
- FIG 3: den Nachrichtenfluß zwischen Teilnehmer, Benutzergerät und Identitätsmodul für eine Authentifiaktion des Identitätsmoduls, und
- FIG 4: den Nachrichtenfluß zwischen Teilnehmer, Benutzergerät und Identitätsmodul für das Aufheben der Sperre im Benutzergerät,

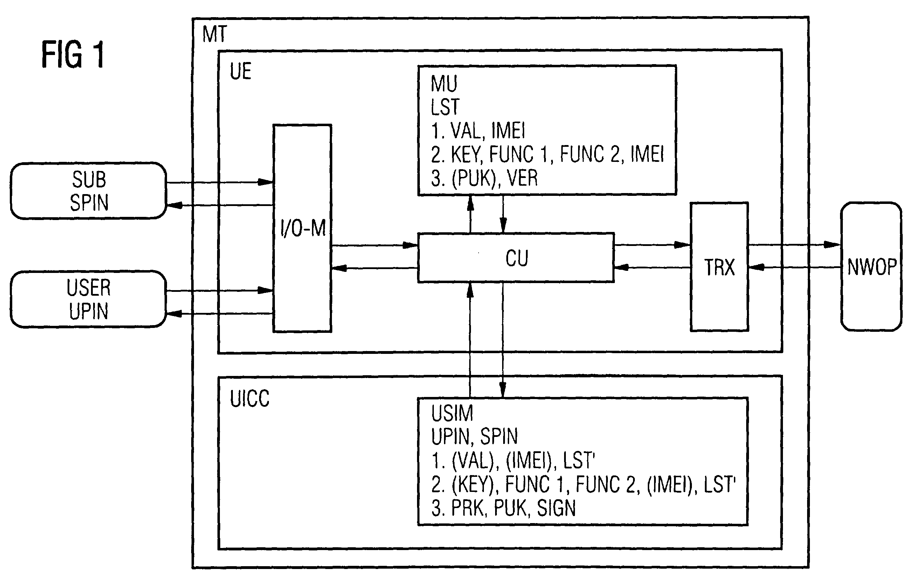

FIG 1 zeigt in einem Blockschaltbild den grundsätzlichen Aufbau einer Mobilstation MT, das ein Benutzergerät UE (User Equipment) und eine Chipkarte UICC (UMTS Identity Chip Card) mit einem Identitätsmodul USIM (UMTS Services Identity Module) aufweist. Das Beispiel bezieht sich auf einen Einsatz der Mobilstation MT in einem zukünftigen UMTS (Universal Mobile Telecommunication System) - Funkkommunikationssystem, könnte aber ebenso auf andere Funkkommunikationssysteme - beispielsweise auf das bekannte GSM-System (Global System for Mobile Communnication) - angewendet werden. Ein Benutzer USER nutzt die Mobilstation bekanntlich zur Kommunikation mit anderen Benutzern von Kommunikationsnetzen oder mit deren Netzeinrichtungen. Über eine Funkschnittstelle werden die Informationen auf Kommunikationsverbindungen zwischen der Mobilstation MT und Netzeinrichtungen eines Funk-Kommunikationssystems NWOP in beiden Übertragungsrichtungen ausgetauscht.

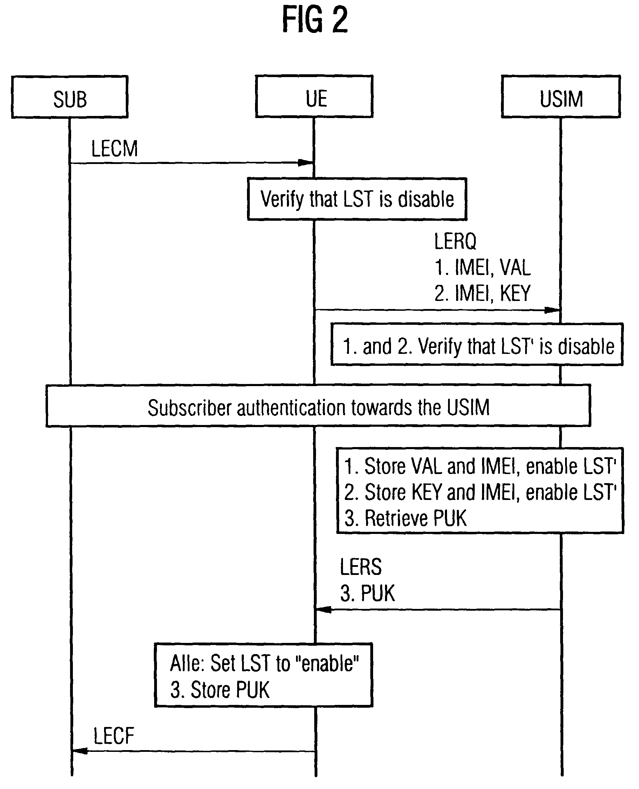

Zum Senden und Empfangen von Funksignalen, die Sprache und Daten enthalten können, weist das Benutzergerät UE eine Sende-Empfangs-Einrichtung TRX auf, die mit einer zentralen Steuereinrichtung CU verbunden ist. Die Steuereinrichtung CU ist darüber hinaus an eine Speichereinrichtung MU und ein Ein-Ausgabe-Modul I/O-M angeschlossen. Das Ein-Ausgabe-Modul I/O-M bildet eine Schnittstelle zu dem Benutzer USER oder einem mobilen Teilnehmer SUB, um im vorliegenden Beispiel insbesondere die Eingaben des Teilnehmers, der üblicherweise der Inhaber der Mobilstation ist, zum empfangen. Das Benutzergerät UE ist an das Identitätsmodul USIM über eine Benutzergerät-Chipkarten-Schnittstelle (UE-UICC interface) angeschaltet. Der mobile Teilnehmer des zellularen digitalen Mobilfunknetzes kann sich mit dem Identitätsmodul USIM gegenüber dem jeweiligen Netz, in dem er registriert ist, identifizieren. Zum eindeutigen Identifizieren speichert das Identitätsmodul USIM teilnehmerbezogene Daten. Zwischen den oben beschriebenen Einrichtungen verlaufen Nachrichten (messages), von denen die für die Erfindung und deren Ausgestaltungen relevanten Nachrichten in den folgenden Figuren 2 bis 4 erläutert werden.

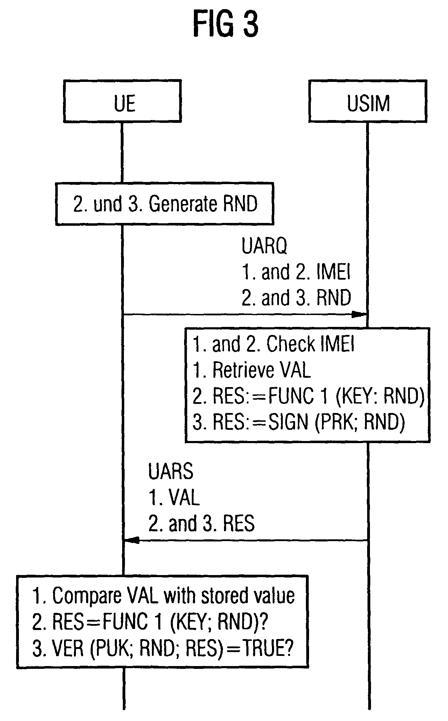

Gemäß dem Gegenstand der Erfindung wird das Benutzergerät UE durch ein teilnehmergesteuertes Sperren und Entsperren gegen einen Missbrauch gesichert. Vorzugsweise kann durch das Sperren und Entsperren des Benutzergeräts UE eine Bindung an das Identitätsmodul USIM erzeugt und aufgehoben werden. Die gegen eine unerlaubte Modifikation der gespeicherten Daten gesicherte Speichereinrichtung MU speichert für das Benutzergerät UE einen Zustand LST (lock state), der angibt, ob das Gerät gesperrt oder entsperrt ist. Darüber hinaus enthält die Speichereinrichtung MU mehrere Sicherheitsparameter die zur Überprüfung der Identität des Identitätsmoduls USIM benutzt werden.
Sobald das Benutzergerät UE angeschaltet ist oder ein neues Identitätsmodul USIM in die Mobilstation MT eingesetzt wird, verifiziert die Speichereinrichtung MU anhand des Zustands LST, ob die Sperre gesetzt oder aufgehoben ist. Für den Fall, dass sich das Benutzergerät UE im entsperrten Zustand (LST disabled) befindet, initiiert es eine Authentifikation des Identitätsmoduls USIM. Zu diesem Zweck sendet die Steuereinrichtung CU des Benutzergeräts UE die Anfragenachricht UARQ (USIM Authentication Request) aus, auf die vom Identitätsmodul USIM eine Antwortnachricht UARS (USIM Authentication Response) folgt - siehe FIG 3. Die Steuereinrichtung CU wertet die Antwortnachricht aus und entscheidet, ob die Authentifikation erfolgreich verlaufen ist. Ist das Ergebnis negativ, veranlasst die Steuereinrichtung CU, dass das Benutzergerät UE sich in einem blockierten Modus (blocked mode) befindet und weitere Operationen abgelehnt werden, bis das richtige Identitätsmodul USIM eingesetzt ist. Ist das Ergebnis positiv, veranlasst die Steuereinrichtung CU das Eintragen eines normalen Modus (blocked mode) für das Benutzergerät UE.

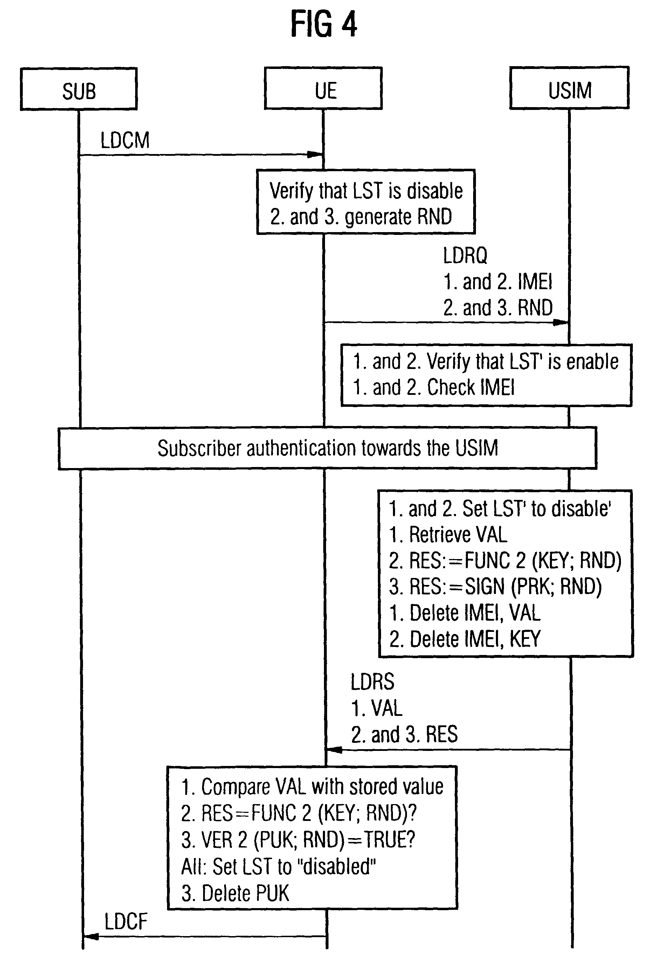

Befindet sich das Benutzergerät UE im Normalmodus und die Sperre wirkt, d.h. die Chipkarte UICC mit richtigem Identitätsmodul USIM steckt in der Mobilstation MT, hat der Teilnehmer SUB die Möglichkeit, das Benutzergerät UE durch Aufheben der Sperre zu entsperren. Der Teilnehmer SUB gibt einen Befehl LDCM (Lock Disable Command) ein - siehe FIG 4 - , der vom Benutzergerät UE in eine Nachricht LDRQ (Lock Disable Request) umgesetzt und an das Identitätsmodul USIM dann ausgesendet wird, wenn der Zustand LST dies erlaubt (LST enabled). Die erforderlichen Schitte veranlasst die Steuereinrichtung CU. Das Identitätsmodul USIM authentifiziert dann den Teilnehmer SUB. Bei erfolgreicher Authentifikation bestätigt das Identitätsmodul USIM das Entsperren des Benutzergeräts UE, wobei es zuvor ihren entsprechenden Zustand LST' für das Benutzergerät UE intern zurücksetzt (LST' disabled) - siehe FIG 4. Zur Bestätigung sendet es eine Nachricht LDRS (Lock Disable Response) zurück, woraufhin die Steuereinrichtung CU das Aufheben der bisherigen Sperre in der Speichereinrichtung MU (LST disabled) veranlaßt und das Entsperren dem Teilnehmer SUB mit der Nachricht LDCF (Lock Disable Confirm) bestätigt - siehe FIG 4.

Wenn erfindungsgemäß die Sperre im Benutzergerät US aufgehoben ist, erkennbar am Zustand LST, hat jeder Teilnehmer SUB die Möglichkeit die Sperre wieder einzuschalten und das Benutzergerät UE an die Chipkarte UICC mit seinem Indentitätsmodul USIM zu binden. Der Teilnehmer SUB gibt einen entsprechenden Befehl LECM (Lock Enable Command) ein - siehe FIG 2 - , der von der Steuereinrichtung CU des Benutzergeräts US in eine Nachricht LERQ (Lock Enable Request) umgesetzt und zum Identitätsmodul USIM dann ausgesendet wird, wenn der Zustand LST dies erlaubt (LST disabled). Die erforderlichen Schitte veranlasst die Steuereinrichtung CU.. Das Identitätsmodul USIM authentifiziert dann den Teilnehmer SUB. Bei erfolgreicher Authentifikatlon bestätigt das Identitätsmodul USIM das Sperren des Benutzergeräts UE, wobei es zuvor ihren entsprechenden Zustand LST' für das Benutzergerät UE intern setzt (enable LST') - siehe FIG 2. Zur Bestätigung sendet es eine Nachricht LERS (Look Enable Response) zurück, woraufhin die Steuereinrichtung CU das erneute Setzen der Sperre in der Speichereinrichtung MU (LST enabled) veranlaßt und den gesperrten Zustand dem Teilnehmer SUB mit der Nachricht LECF (Lock Enable Confirm) bestätigt - siehe FIG 2.

Die Teilnehmerauthentifikation ist vorzugsweise sowohl beim Sperren als auch beim Entsperren erforderlich. Dabei finden bevorzugt andere Sicherheitsparameter Anwendung als die bei einer Benutzerauthentifikation zur Überprüfung der Zugangsberechtigung des mobilen Benutzers zum Funk-Kommunikationssystem benutzten Sicherheitsparameter. Im einfachsten Fall wird zur Teilnehmer- und Benutzerauthentifikation eine persönliche Identifikationsnummer verwendet, die für den Teilnehmer SUB aus der Nummer SPIN und für den Benutzer USE aus der Nummer UPIN besteht.

Die Zustände Sperren/Entsperren für das Benutzergerät UE sind durch das Identitätsmodul USIM änderbar, jeweils auf Anforderung eines Teilnehmers oder Benutzers der Mobilstation MT über entsprechende Eingabebefehle. Dadurch entsteht eine hohe Sicherheit für die Benutzergeräte und die Mobilstationen, die völlig netzunabhängig auf einem zwischen dem Benutzergerät UE und dem in die Mobilstation eingesetzten Identitätsmodul USIM basierenden Verfahren abläuft. Das teilnehmergesteuerte Sperren und Entsperren auf Basis des Benutzergeräts UE mit der der Bindung an das jeweilige Identitätsmodul USIM erlaubt eine serielle Nutzung mehrerer Module in Chipkarten UICC (bzw. SIM-Karten für GSM-Systeme) - in ein- und demselben Benutzergerät, was insbesondere beim Übergang des mobilen Teilnehmers in mehrere Funk-Kommunikationssysteme in Bezug auf die Sicherungsfunktionen von Vorteil ist.

Mehrere Mechanismen sind zur Implementierung des teilnehmergesteuerten Sperr- und Entsperrvorgangs anwendbar, von denen im folgenden drei Beispiele angegeben sind. Dabei reichen diese Beispiele von einfach bis aufwendig, wobei letztgenannte Ausführungsbeispiele den Vorteil einer höheren Sicherheit bieten.

Allen Beispielen ist gemeinsam, dass in der Speichereinrichtung MU des Benutzergeräts UE der Zustand LST, eine unveränderbare Gerätekennung IMEI (user equipment identity) und einige zusätzliche Daten gespeichert sind.

Eine erste Variante - siehe unter 1. in den Figuren 2 bis 4 - zum Sperren/Entsperren besteht darin, in der Speichereinrichtung MU einen unveränderbaren Wert VAL abzulegen, der auch von dem Identitätsmodul USIM gespeichert wird. Falls die Sperre wirkt (lock enabled), sendet das Benutzergerät UE den Wert VAL und die Gerätekennung IMEI in der Nachricht LERQ zum Identitätsmodul USIM, das - nach erfolgreicher Authentifikation - den Wert VAL and die Gerätekennung IMEI in seinem Speicher speichert und die Sperre durch Änderung des Zustands LST' im Modul setzt. Zu einem späteren Zeitpunkt, im Falle der Authentifikation zwischen Benutzergerät UE und Identitätsmodul USIM - siehe FIG 3 - , sendet das Modul den gespeicherten Wert VAL in der Nachricht UARS zum Gerät. Dieser eintreffende Wert VAL wird mit dem in der Speichereinrichtung MU abgelegten Wert VAL verglichen. Die Identifikation des Benutzergeräts UE anhand der Gerätekennung IMEI verhindert, dass der Wert VAL im Modul USIM bei Einsetzen des Moduls USIM in ein anderes Benutzergerät UE überschrieben wird, wobei das Benutzergerät UE, das ursprünglich an dieses Modul gebunden war, unbrauchbar würde. Diese Vorgehensweise erlaubt so viele Benutzergeräte UE an ein einziges Identitätsmodul USIM zu binden, wie Speicherkapazität hierfür im Modul vorhanden ist.

Eine zweite Variante - siehe unter 2. in den Figuren 2 bis 4 - zum Sperren/Entsperren besteht darin, dass die Speichereinrichtung einen unveränderbaren Schlüssel KEY sowie zwei Sicherungsfunktionen FUN1 und FUN2 enthält. Das Identitätsmodul USIM speichert ebenso in seinem Speicher den Schlüssel KEY, die Gerätekennung IMEI und die beiden Sicherungsfunktionen FUN1 und FUN2. Zum Setzen der Sperre sendet das Benutzergerät UE den Schlüssel KEY und ihre Gerätekennung IMEI in der Nachricht ELRQ zum Modul USIM. Das Modul speichert die eintreffenden Daten KEY und IMEI nach erfolgreicher Teilnehmeraurhentifikation. Zu einem späteren Zeitpunkt, im Falle der Authentifikation zwischen Benutzergerät UE und Identitätsmodul USIM - siehe FIG 3 - , erzeugt das Gerät eine Zufallszahl RND und sendet sie zusammen mit der Kennung IMEI in der Nachricht UARQ zum Modul. Das Modul berechnet anhand der Sicherungsfunktion FUN1, des gespeicherten Schlüsels KEY und der empfangenen Zufallszahl RND eine zugehörige Antwort RES und sendet sie in der Nachricht UARS zum Gerät zurück.

Bei Eintreffen der Antwort wird von der Steuereinrichtung CU eine zugehörige Antwort RES nach demselben Verfahren berechnet und das Eergebnis mit der vom Modul empfangenen Antwort verglichen.

Wenn die Sperre im Benutzergerät UE wirkt und das richtige Identitätsmodul USIM eingesetzt ist, kann diese Sperre teilnehmergesteuert aufgehoben werden, indem der Teilnehmer SUB den Befehl LDCM initiiert - siehe FIG 2. In diesem Fall generiert das Benutzergerät UE eine Zufallszahl RND und sendet sie gemeinsam mit der Kennung IMEI in der Nachricht LDRQ zum Modul USIM. Das Modul verifiziert die Kennung IMEI, authentifiziert den Teilnehmer SUB und, falls diese erfolgreich ist, berechnet die Antwort RES unter Anwendung des Schlüssels KEY, der Zahl RND und der Sicherungsfunktion FUN2. Die auf diese Weise berechnete Antwort RES wird zum Gerät UE gesendet, wo sie dessen Entsperren durch Ändern des Zustands LST bewirkt. Vorzugsweise werden immer zwei verschiedene Funktionen FUN1 and FUN2 zum Schutz gegen Attacken benutzt, die vor allem die Modifikation der über die Schnittstelle zwischen Gerät und Modul übertragenen Nachrichten zum Ziel haben. Bei einer einzelnen Sicherungsfunktion könnte die Nachricht LDRQ auf dieser Schnittstelle abgehört, zur Nachricht UARQ modifiziert an das Modul USIM weitergeleitet werden. Danach würde die Antwort vom Modul abgehört werden, ohne dass eine Authentifikation erfolgt, und anschließend eine geeignete Nachricht DLRS zum Gerät UE unter Nutzung der abgehörten Antwort RES gesendet werden.

Die dritte Variante - siehe unter 3. in den Figuren 2 bis 4 - zum Sperren/Entsperren besteht darin, dass die Speichereinrichtung MU genügend Speicherplatz besitzt, um einen öffentlichen Schlüssel PUK sowie eine Verifizierungsalgorithmus VER zu speichern. Das Modul USIM enthält in seinem Speicher ebenso den öffentlichen Schlüssel PUK, einen dazu korrespondierenden privaten Schlüssel PRK, und eine Unterzeichnenfunktion SIGN (signing function). Nachdem das Gerät UE das Modul USIM zum Entsperren auffordert und der Teilnehmer SUB sich erfolgreich gegenüber dem Modul USIM authentifiziert hat, sendet das Modul USIM ihren öffentlichen Schlüssel PUK. Wenn das Gerät eine Authentifikation durchführt, generiert es eine Zufallszahl RND und sendet sie in der Nachricht UARQ zum Modul. Das Modul berechnet eine Antwort RESP, nutzend die Unterzeichnerfunktion SIG, die Zahl RND und ihren privaten Schlüssel PRK, und sendet das Ergebnis in der Nachricht UARS zum Gerät UE. Das Gerät verifiziert, ob die empfangene Antwort RES eine korrekte Antwort auf die Zufallszahl RND ist, indem sie die Verfizierungsfunktion VER, den öffentlichen Schlüssel PUK des Moduls USIM und die Zahl RND zur Berechnung einer eigenen Antwort benutzt und das Ergebnis mit der empfangenen Antwort RES vergleicht.

Die zweite Variante schützt vor allem gegen ein Abhören auf der Schnittstelle zwischen Gerät UE und Modul USIM, da der geheime Schlüssel KEY weder das Gerät noch das Modul USIM verläßt, solange nicht die Sperre erstmalig erfolgreich aufgehoben wird, wofür die Authentifikation notwendig ist. as

## Patentansprüche

1. Verfahren zur Sicherung von Benutzergeräten (UE) in Mobilstationen (MT) mobiler Teilnehmer eines Funk-Kommunikationssystems, wobei jede Mobilstation (MT) außer dem Benutzergerät (UE) ein Identitätsmodul (USIM) mit teilnehmerbezogenen Daten zur Identifizierung des mobilen Teilnehmers gegenüber dem Funk-Kommunikationssystem aufweist,
**dadurch gekennzeichnet,**
dass das Benutzergerät (UE) durch ein teilnehmergesteuertes Sperren und Entsperren gegen einen Missbrauch gesichert wird.

2. Verfahren nach Anspruch 1,
**dadurch gekennzeichnet,**
dass durch das Sperren und Entsperren des Benutzergeräts (UE) eine Bindung an das Identitätsmodul (USIM) erzeugt und aufgehoben wird.

3. Verfahren nach Anspruch 1 oder 2,
**dadurch gekennzeichnet,**
dass zum Sperren und Entsperren des Benutzergeräts (UE) eine Teilnehmerauthentifikation gegenüber dem Identitätsmodul (USIM) durchgeführt wird.

4. Verfahren nach Anspruch 3,
**dadurch gekennzeichnet,**
dass für die Teilnehmerauthentifikation andere Sicherheitsparameter (VAL, KEY, PUK, PRK) als die bei einer Benutzerauthentifikation zur Überprüfung der Zugangsberechtigung eines mobilen Teilnehmers zum Funk-Kommunikationssystem benutzten Sicherheitsparameter angewendet werden.

5. Verfahren nach Anspruch 3 oder 4,
**dadurch gekennzeichnet,**
dass zur Teilnehmerauthentifikation eine persönliche Identifikationsnummer (SPIN) verwendet wird.

6. Verfahren nach einem der vorhergehenden Ansprüche,
**dadurch gekennzeichnet,**
dass beim Sperren und Entsperren des Benutzergeräts (UE) ein privater Schlüssel (PRK) und ein öffentlicher Schlüssel (PUK) als Sicherheitsparameter verwendet werden.

7. Verfahren nach Anspruch 6,
**dadurch gekennzeichnet,**
dass der öffentliche Schlüssel (PUK) in einer Speichereinrichtung (MU) des Benutzergeräts (UE) und der private Schlüssel (PRK) in dem Identitätsmodul (USIM) abgelegt und von dem Benutzergerät (UE) zur Überprüfung der Identität des Identitätsmoduls (USIM) benutzt werden.

8. Verfahren nach Anspruch 6 oder 7,
**dadurch gekennzeichnet,**
dass die Identität des Identitätsmoduls (USIM) überprüft wird, indem
- das Benutzergerät (UE) eine Zufallszahl erzeugt und zu dem Identitätsmodul (USIM) sendet,
- das Identitätsmodul (USIM) anhand der Zufallszahl und dem privaten Schlüsel (PRK) eine Antwort (RES) erzeugt und zu dem Benutzergerät (UE) sendet, und
- das Benutzergerät (UE) die empfangene Antwort (RES) mit einer anhand öffentlichen Schlüssels (PUK) berechneten eigenen Antwort verifiziert.

9. Mobilstation (MT) eines mobilen Teilnehmers eines Funk-Kommunikationssystems, mit einem Benutzergerät (UE) und einem Identitätsmodul (USIM) zur Speicherung von teilnehmerbezogenen Daten für eine Identifizierung des mobilen Teilnehmers gegenüber dem Funk-Kommunikationssystem,
**dadurch gekennzeichnet,**
dass das Benutzergerät (UE) Mittel (CU, MU) zum teilnehmergesteuerten Sperren und Entsperren des Identitätsmoduls (USIM) aufweist.

10. Verfahren nach Anspruch 9,
**dadurch gekennzeichnet,**
dass Durch die Mittel (CU; MU) zum Sperren und Entsperren des Benutzergeräts (UE) eine Bindung an das Identitätsmodul (USIM) erzeugbar und aufhebbar ist.
